# EUROPEAN PATENT APPLICATION

(11) **EP 4 664 434 A1**
(43) Date of publication of application: **17.12.2025**
(21) Application number: 23927387.3
(22) Date of filing: 14.03.2023
(51) Int. Cl.: G08G 1/16

(54) **INFORMATION PROCESSING DEVICE, INFORMATION PROCESSING METHOD, AND PROGRAM**

(71) Applicant: HONDA MOTOR CO., LTD., Tokyo 105-8404 (JP)
(72) Inventor: YOSHIMURA, Misako, Wako-shi, Saitama 351-0193 (JP); KIZUMI, Yuki, Tokyo 107-8556 (JP); NAKANISHI, Kosuke, Wako-shi, Saitama 351-0193 (JP); FUJIMOTO, Gakuyo, Wako-shi, Saitama 351-0193 (JP); SAIGUSA, Shigenobu, Wako-shi, Saitama 351-0193 (JP); HANAKAWA, Taku, Tokyo 102-0075 (JP); BEPPU, Takaaki, Tokyo 102-0075 (JP); WANG, Haojie, Tokyo 102-0075 (JP)
(74) Representative: Kiwit, Benedikt
(86) International application number: PCT/JP2023/009795
(87) International publication number: WO 2024/189766

(57) **Abstract**

An information processing apparatus includes: an acquisition portion that acquires direction information indicating a visual observation direction in which a user is visually observing based on an image of a face of the user captured by an imaging portion at a predetermined interval; and a process portion which estimates that the user has visually observed a second region in a first direction when it is determined that based on the direction information, the user is visually observing a first region in the first direction in which the visual observation direction is any of left and right directions with respect to a reference direction in a horizontal direction for a predetermined time and then it is determined that it becomes impossible to acquire the direction information based on the image.

## Description

### TECHNICAL FIELD

The present invention relates to an information processing apparatus, an information processing method, and a program.

### BACKGROUND

In the related art, a device is disclosed which estimates a direction of a face of a monitor target person based on a captured image (for example, refer to Patent Document 1).

### [Related Art Documents]

### [Patent Documents]

[Patent Document 1]
Japanese Unexamined Patent Application, First Publication No. 2015-102498

### SUMMARY OF INVENTION

### PROBLEMS TO BE SOLVED BY THE INVENTION

However, in the device described, there are cases in which a visual observation direction of a user who is the monitor target person cannot be estimated. For example, when the face is not captured in the image, there are cases in which the visual observation direction cannot be recognized.

In consideration of such circumstances, it is an object of the present invention to provide an information processing apparatus, an information processing method, and a program capable of estimating a visual observation direction of a user. The information processing apparatus, the information processing method, and the program can perform notification in accordance with the visual observation direction of the user, for example, in order to estimate the visual observation direction of the user as described above.

### MEANS FOR SOLVING THE PROBLEM

An information processing apparatus, an information processing method, and a program according to this invention employ the following configurations.
(1): An information processing apparatus according to an aspect of this invention includes: an acquisition portion that acquires direction information indicating a visual observation direction in which a user is visually observing based on an image of a face of the user captured by an imaging portion at a predetermined interval; and a process portion which estimates that the user has visually observed a second region in a first direction when it is determined that based on the direction information, the user is visually observing a first region in the first direction in which the visual observation direction is any of left and right directions with respect to a reference direction in a horizontal direction for a predetermined time and then it is determined that it becomes impossible to acquire the direction information based on the image.
(2): In the aspect (1) described above, the first region is a region from a first horizontal direction that is different from the reference direction which is a center axis direction of a movable body on which the user boards to a second horizontal direction that is different from the reference direction and the first horizontal direction, and the second region is a region in a horizontal direction that is further away from the reference direction than the first region.
(3): In the aspect (1) or (1) described above, when the face of the user faces the first region in a range from a first horizontal direction that is different from the reference direction which is a center axis direction of a movable body on which the user boards to a second horizontal direction that is different from the reference direction and the first horizontal direction, the imaging portion is capable of capturing an image including the face of the user from which the process portion is capable of acquiring the direction information based on the image, when the face of the user faces in a horizontal direction that is further away than the first horizontal direction and the second horizontal direction with reference to the reference direction, the imaging portion is not able to capture an image including the face of the user from which the process portion is capable of acquiring the direction information based on the image, and when it is determined that the user is visually observing the first region for a predetermined time and then it is determined that it becomes impossible to acquire the direction information based on the image, the process portion assumes that the face of the user faces in the horizontal direction that is further away than the first horizontal direction and the second horizontal direction with reference to the reference direction and estimates that the user has visually observed the second region in the first direction.
(4): In the aspect (3) described above, the imaging portion is mounted on the movable body and captures an image of the user who is an occupant of the movable body from a position that faces the user and is displaced in a predetermined direction from the reference direction.
(5): In the aspect (2) described above, the imaging portion is mounted on the movable body and captures an image of the user who is an occupant of the movable body from a position that faces the user and is displaced in a predetermined direction regarding a horizontal direction from the reference direction, the first region is a region in which the process portion is capable of recognizing the visual observation direction based on the image captured by the imaging portion, and a range in a horizontal direction of the first region in the first direction is different from a range in the horizontal direction of the first region in a second direction which is an opposite direction to the first direction.
(6): In the aspect (5) described above, the range in the horizontal direction of the first region in the first direction is a range from a first virtual line to a second virtual line, the first virtual line is a line that extends from a reference point in the first horizontal direction which is different from the reference direction that is the center axis direction of the movable body on which the user boards, the second virtual line is a line that starts from the reference point and extends in the second horizontal direction obtained by rotating the first virtual line by a first angle, the range in the horizontal direction of the first region in the second direction is a range from a third virtual line to a fourth virtual line, the third virtual line is a line that extends from a reference point in a third horizontal direction which is different from the reference direction, the fourth virtual line is a line that starts from the reference point and extends in a fourth horizontal direction obtained by rotating the third virtual line by a second angle, and the second angle is larger than the first angle.
(7): In the aspect (1) described above, the user is a driver of a movable body, and on a condition that an object is present in a vicinity of the movable body, when it is determined that based on the direction information, the first region in the first direction in which the visual observation direction is any of the left and right directions with respect to the reference direction is being visually observed for the predetermined time and then it is determined that it becomes impossible to acquire the direction information based on the image, the process portion performs an estimation process which estimates that the user has visually observed the second region in the first direction.
(8): In the aspect (7) described above, the object is a pedestrian, a bicycle, an automobile, or a two wheeled vehicle.
(9): In any of the aspect (7) described above, the reference direction is a forward direction of the movable body, and the process portion performs the estimation process on a condition that the object is present in a target region which is in a side direction of the movable body and in which the driver is capable of recognizing the object by visually recognizing the second region.
(10): In the aspect (7) described above, the process portion performs notification having a first intensity when the process portion does not estimate that the object is present in a target region which is in a side direction of the movable body and in which the driver is capable of recognizing the object by visually recognizing the second region and that the driver has visually observed the second region, and the process portion performs notification having a second intensity which is weaker than that of the notification having the first intensity when the process portion estimates that the object is present in the target region and that the driver has visually observed the second region.
(11): An information processing method according to another aspect of the present invention performs, by way of a computer, a process of acquiring direction information indicating a visual observation direction in which a user is visually observing based on an image of a face of the user captured by an imaging portion at a predetermined interval, and a process of estimating that the user has visually observed a second region in a first direction when it is determined that based on the direction information, the user is visually observing a first region in the first direction in which the visual observation direction is any of left and right directions with respect to a reference direction in a horizontal direction for a predetermined time and then it is determined that it becomes impossible to acquire the direction information based on the image.
(12): A program according to another aspect of the present invention causes a computer to perform: a process of acquiring direction information indicating a visual observation direction in which a user is visually observing based on an image of a face of the user captured by an imaging portion at a predetermined interval; and a process of estimating that the user has visually observed a second region in a first direction when it is determined that based on the direction information, the user is visually observing a first region in the first direction in which the visual observation direction is any of left and right directions with respect to a reference direction in a horizontal direction for a predetermined time and then it is determined that it becomes impossible to acquire the direction information based on the image.

### ADVANTAGE OF THE INVENTION

According to the aspects (1) to (12) described above, it is possible to estimate the visual observation direction of the user who is a monitor target person. For example, the information processing apparatus can estimate the visual observation direction of the user even when the image of the face cannot be acquired.

According to the aspect (10) described above, the information processing apparatus can perform appropriate notification in accordance with the visual observation direction.

### BRIEF DESCRIPTION OF THE DRAWINGS

FIG. 1 is a configuration view of a vehicle M on which a vehicle system 1 of an embodiment is mounted.
FIG. 2 is a view showing an example of a functional configuration of the vehicle system 1.
FIG. 3 is a view showing an example of a scene in which a bicycle is present in the vicinity of the vehicle M.
FIG. 4 is a view showing an example of notification displayed on a display portion.
FIG. 5A is a view (part 1) for explaining a region of a driver monitor camera 60.
FIG. 5B is a view (part 2) for explaining a region of the driver monitor camera 60.
FIG. 6 is a view showing an example of an image captured by the driver monitor camera.
FIG. 7 is a view for explaining the direction of a face of a driver and a range that can be visually observed from an image.
FIG. 8 is a view for explaining a process of estimating that the driver has visually observed an object outside a region.
FIG. 9 is a flowchart showing an example of a flow of a process performed by a driver recognition portion 120.
FIG. 10 is a view showing an example of visual observation information.
FIG. 11 is a flowchart showing an example of a flow of a process performed by a process portion 130.
FIG. 12 is a view for explaining a first target region.
FIG. 13 is an example of a scene in which a risk object is present in a second target region on a left side of a vehicle.

### DESCRIPTION OF THE EMBODIMENTS

Hereinafter, embodiments of an information processing apparatus, an information processing method, and a program of the present invention will be described with reference to the drawings.

Hereinafter, a forward direction of a movable body may be referred to as a plus X direction, a rearward direction of the movable body may be referred to as a minus X direction, a rightward direction (a rightward direction when facing the plus X direction) in a direction orthogonal to a forward-rearward direction may be referred to as a plus Y direction, a leftward direction (a leftward direction when facing the plus X direction) in a direction orthogonal to the forward-rearward direction may be referred to as a minus Y direction, a vertically upward direction that is a direction orthogonal to the X direction and the Y direction may be referred to as a plus Z direction, and a vertically downward direction that is a direction orthogonal to the X direction and the Y direction may be referred to as a minus Z direction.

### <Embodiment>

### [Overall configuration]

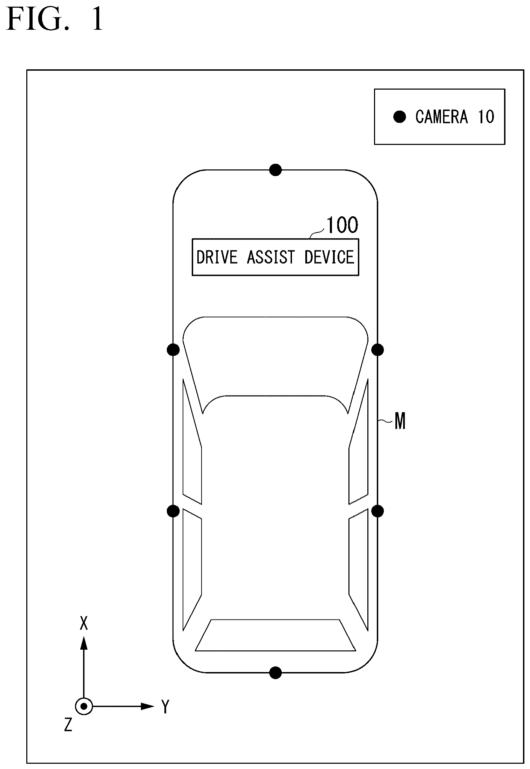

FIG. 1 is a configuration view of a vehicle M on which a vehicle system 1 (a camera 10 and a drive assist device 100) of an embodiment is mounted. The vehicle M is, for example, a vehicle such as a two wheeled, three wheeled, or four wheeled vehicle, and a drive source thereof is an internal combustion engine such as a diesel engine or a gasoline engine, an electric motor, or a combination thereof. The electric motor operates by using electric power generated by an electric generator connected to the internal combustion engine or discharged electric power of a secondary battery or a fuel cell. The vehicle M is an example of a "movable body".

One or more cameras 10 are mounted on the vehicle M. Each of a plurality of cameras 10 captures an image of surroundings (for example, surrounding 360 degrees) of the vehicle M. Each of the plurality of cameras 10 captures an image of an imaging region of each camera, and thereby, an image of the surroundings of the vehicle M is captured. The camera 10 may be set at an arbitrarily position where an image of the surroundings of the vehicle M can be captured. The number of the cameras 10 may also be arbitrarily set.

The drive assist device 100 recognizes or estimates a visual observation direction of an occupant based on an image captured by the camera 10 and controls notification based on an estimation result.

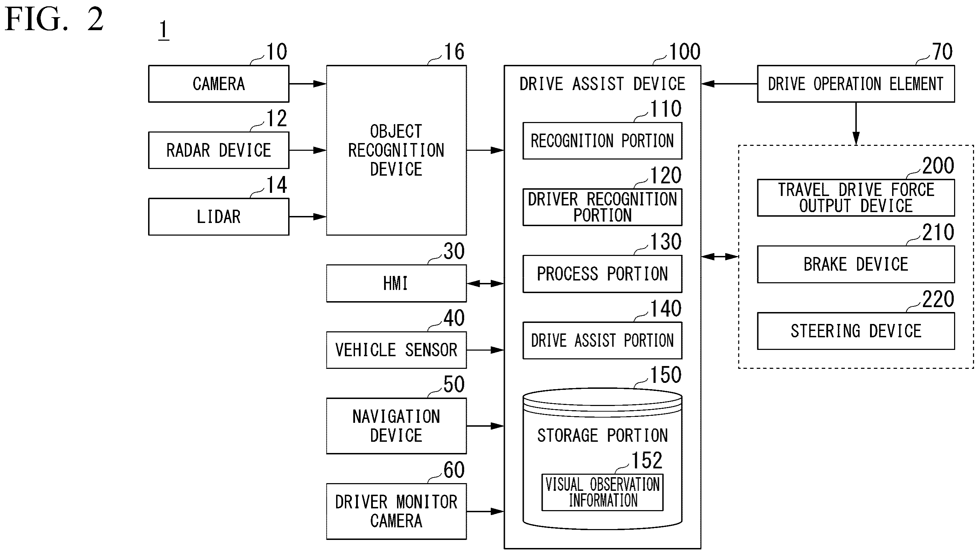

FIG. 2 is a view showing an example of a functional configuration of the vehicle system 1. For example, one or more cameras 10, a radar device 12, a LIDAR (Light Detection and Ranging) 14, an object recognition device 16, an HMI (Human Machine Interface) 30, a vehicle sensor 40, a navigation device 50, a driver monitor camera 60 (an example of an "imaging portion"), a drive operation element 70, the drive assist device 100, a travel drive force output device 200, a brake device 210, and a steering device 220 are mounted on the vehicle M. These devices and equipment are connected to each other by a multiplex communication line such as a CAN (Controller Area Network) communication line, a serial communication line, a wireless communication network, and the like. The configuration shown in FIG. 1 is merely an example, and part of the configuration may be omitted, or another configuration may be further added.

The camera 10 is, for example, a digital camera that utilizes a solid-state imaging element such as a CCD (Charge Coupled Device) or a CMOS (Complementary Metal Oxide Semiconductor). The camera 10 is attached to an arbitrary position of the vehicle M. For example, the camera 10 periodically and repeatedly captures an image of the vicinity of the vehicle M. The camera 10 may be a stereo camera.

The radar device 12 radiates radio waves such as millimeter waves to the vicinity of the vehicle M and detects at least a position (a distance and an orientation) of an object by detecting radio waves (reflected waves) reflected by the object. The radar device 12 is attached to an arbitrary portion of the vehicle M. The radar device 12 may detect the position and a speed of the object by a FM-CW (Frequency Modulated Continuous Wave) method.

The LIDAR 14 radiates light (or electromagnetic waves having a wavelength close to that of light) to the vicinity of the vehicle M and measures scattered light. The LIDAR 14 detects the distance to a target based on a time from light emission to light reception. The radiated light is, for example, pulsed laser light. The LIDAR 14 is attached to an arbitrary portion of the vehicle M.

The object recognition device 16 performs sensor fusion processing on a detection result by some or all of the cameras 10, the radar device 12, and the LIDAR 14 and recognizes the position, the speed, and the like of the object. The object recognition device 16 outputs a recognition result to the drive assist device 100. The object recognition device 16 may output a detection result of the camera 10, the radar device 12, and the LIDAR 14 to the drive assist device 100 as they are. The object recognition device 16 may be omitted from the vehicle system 1.

The HMI 30 presents various information to an occupant of the vehicle M and receives an input operation by the occupant. The HMI 30 includes various display devices, a speaker, a buzzer, a vibration generation device (vibrator), a touch panel, a switch, a key, and the like.

The vehicle sensor 40 includes a vehicle speed sensor that detects the speed of the vehicle M, an acceleration sensor that detects the acceleration, a yaw rate sensor that detects the angular speed around a vertical axis, an orientation sensor that detects the direction of the vehicle M, and the like.

The navigation device 50 has, for example, a GNSS (Global Navigation Satellite System) receiver, a guidance control portion, a storage portion that stores map information, and the like. The GNSS receiver identifies a position of the vehicle M based on a signal received from a GNSS satellite. The position of the vehicle M may be identified or supplemented by an INS (Inertial Navigation System) using an output of the vehicle sensor 40. The guidance control portion determines a route, for example, from the position (or an arbitrary input position) of the vehicle M specified by the GNSS receiver to a destination input by the occupant with reference to the map information, and causes the HMI 30 to output guidance information so that the vehicle M travels along the route. The map information is, for example, information in which a road shape is expressed by a link indicating a road and nodes connected by the link. The map information may include the curvature of a road, POI (Point Of Interest) information, and the like. The navigation device 50 may transmit a current position and a destination of the vehicle M to a navigation server via a communication device and acquire the route from the navigation server.

The driver monitor camera 60 is, for example, a digital camera that utilizes a solid-state imaging element such as a CCD or a CMOS. The driver monitor camera 60 is attached to an arbitrary portion in the host vehicle M in a position and a direction in which an image of a head portion of the occupant (hereinafter, a driver) seated in a driver seat of the vehicle M can be captured in a direction in which an image of a face is captured. The driver monitor camera 60 outputs, to the drive assist device 100, an image that captures the inside of a vehicle room including the driver of the vehicle M from a position where the driver monitor camera 60 is arranged.

The drive operation element 70 includes, for example, an accelerator pedal, a brake pedal, a steering wheel, a shift lever, and other operation elements. A sensor that detects an operation amount or a presence or absence of an operation is attached to the drive operation element 70, and a detection result of the sensor is output to some or all of the travel drive force output device 200, the brake device 210, and the steering device 220.

The travel drive force output device 200 outputs a travel drive force (torque) for the vehicle to travel to a drive wheel. The travel drive force output device 200 includes, for example, a combination of an internal combustion engine, an electric motor, a transmission, and the like, and an ECU (Electronic Control Unit) that controls these components. The ECU controls the configuration described above in accordance with information input from the drive assist device 100 or information input from the drive operation element 70.

The brake device 210 includes, for example, a brake caliper, a cylinder that transmits a hydraulic pressure to the brake caliper, an electric motor that generates the hydraulic pressure in the cylinder, and an ECU. The ECU controls the electric motor in accordance with information input from the drive assist device 100 or information input from the drive operation element 70 so that a brake torque corresponding to a braking operation is output to each wheel. The brake device 210 may include, as a backup, a mechanism that transmits the hydraulic pressure generated by an operation of the brake pedal included in the drive operation element 70 to the cylinder via a master cylinder. The brake device 210 is not limited to the configuration described above and may be an electronically controlled hydraulic brake device that controls an actuator in accordance with information input from the drive assist device 100 and transmits the hydraulic pressure of the master cylinder to the cylinder.

The steering device 220 includes, for example, a steering ECU and an electric motor. The electric motor changes a direction of the steering wheel, for example, by applying a force to a rack and pinion mechanism. The steering ECU drives the electric motor and changes the direction of the steering wheel in accordance with information input from the drive assist device 100 or information input from the drive operation element 70.

### [Drive assist device]

The drive assist device 100 includes, for example, a recognition portion 110, a driver recognition portion 120, a process portion 130, a drive assist portion 140, and a storage portion 150. These functional portions are realized, for example, by a hardware processor such as a CPU (Central Processing Unit) executing a program (software). Further, some or all of these components may be realized by hardware (a circuit portion; including circuitry) such as an LSI (Large Scale Integration), an ASIC (Application Specific Integrated Circuit), a FPGA (Field-Programmable Gate Array), or a GPU (Graphics Processing Unit), or may be realized by the cooperation of software and hardware. The program may be stored in advance in a storage device (storage device including a non-transitory storage medium) such as an HDD or a flash memory of the drive assist device 100, or may be stored in a removable storage medium such as a DVD or a CD-ROM and be installed in the HDD or the flash memory of the drive assist device 100 by the storage medium (non-transitory storage medium) being attached to a drive device.

The storage portion 150 is realized, for example, by a ROM (Read Only Memory), a flash memory, an SD card, a RAM (Random-Access Memory), an HDD (Hard Disk Drive), a register, or the like. Visual observation information 152 described later is stored in the storage portion 150.

The recognition portion 110 recognizes an object that is present in the vicinity of the vehicle M based on a recognition result by the object recognition device 16. The recognition portion 110 recognizes a type, a position, a movement direction, a movement speed, and the like of the object. The object includes some or all of a movable body such as a pedestrian, a bicycle, an automobile, and a two wheeled vehicle, a travel path boundary such as a road lane line, a level difference, a guardrail, a road shoulder, and a median strip, a structure installed on a road such as a road sign and a signboard, and an obstacle such as a falling object existing (falling) on the travel path and an object existing in the vicinity of the vehicle M. The recognition portion 110 may acquire information of the presence, the position, the type, and the like of the object, for example, by inputting an image captured by the camera 10 to a learned model that is learned so as to output information of the presence, the position, the type, and the like of the object when the image captured by the camera 10 is input.

The recognition portion 110 recognizes a risk object in the vicinity of the vehicle M based on the information input by the object recognition device 16. The risk object is an object that the vehicle M should not approach. The risk object is, for example, a pedestrian, a bicycle, another vehicle (automobile), a two wheeled vehicle, or the like. For example, a leaf falling on the road is excluded from the risk object.

The driver recognition portion 120 acquires direction information indicating a visual observation direction in which the user is visually observing based on an image of a face of the user captured by the driver monitor camera 60. The driver recognition portion 120 may recognize the direction information based on the direction of the face or may recognize the direction information based on a predetermined portion of the face or the line of sight. The driver recognition portion 120 acquires the direction information by using a known method. The driver recognition portion 120 may specify the direction in which the driver is visually observing and the degree of rotation of the head (face, neck) from an image of the driver monitor camera 60, for example, based on the position of a part of the face of the driver, the position of a part of the head, and the like. For example, the driver recognition portion 120 may specify the direction in which the driver is visually observing and the degree of rotation of the head based on various information of the position of the corner of the eye in the image, the direction in which the nose is facing, the direction in which the ear is facing, and the like. For example, a correspondence relationship between the direction in which the driver is facing, and the position of the part of the face of the driver, the direction of the part of the face, the position of the part of the head, the direction of the part of the head, and the like may be stored in the storage portion 150 in advance, and the driver recognition portion 120 may refer to the correspondence relationship and specify the direction in which the driver is visually observing and the degree of rotation of the head from the specified position of the part of the face of the driver, the specified direction of the part of the face, the specified position of the part of the head, or the specified direction of the part of the head.

The process portion 130 recognizes or estimates a region that is visually observed, a direction that is visually observed, and the like by utilizing the direction information. Details of this process will be described later.

The drive assist portion 140 performs drive assist of the vehicle M based on a result of a process of the process portion 130. The drive assist portion 140 changes an intensity of notification based on the result of the process of the process portion 130. The drive assist portion 140 may perform the notification or stop the notification based on the result of the process of the process portion 130.

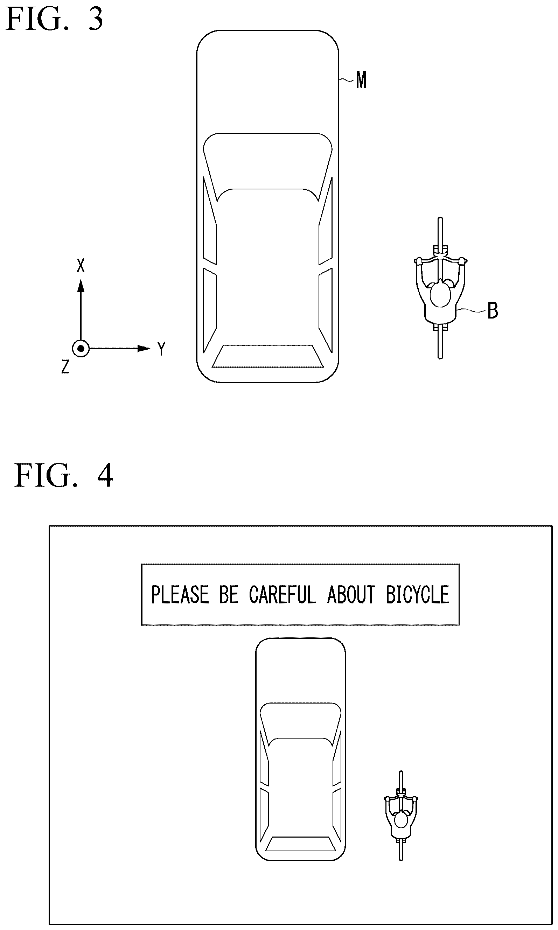

FIG. 3 is a view showing an example of a scene in which a bicycle is present in the vicinity of the vehicle M. In this case, the drive assist portion 140 performs notification on the HMI 30 that attention should be drawn to the bicycle. The notification may be performed by a sound or may be performed by an image. In the example of FIG. 3, since a bicycle B is present in a side direction (in a minus X direction and a plus Y direction further than the driver) of the vehicle M, the notification is performed.

FIG. 4 is a view showing an example of notification displayed on a display portion. As shown in FIG. 4, the drive assist portion 140 causes the display portion (HMI 30) to display an image including contents indicating that attention should be drawn to the bicycle, contents indicating the position of the bicycle relative to the vehicle M, or the like.

### [Details of process relating to notification]

The process portion 130 estimates that a driver has visually observed a second region in a first direction when it is determined that based on direction information indicating a visual observation direction in which the driver is visually observing, a first region in the first direction in which the visual observation direction is any of left and right directions with respect to a reference direction is visually observed for a predetermined time and then it is determined that it becomes impossible to acquire the direction information based on an image. Hereinafter, details of the process described above are described.

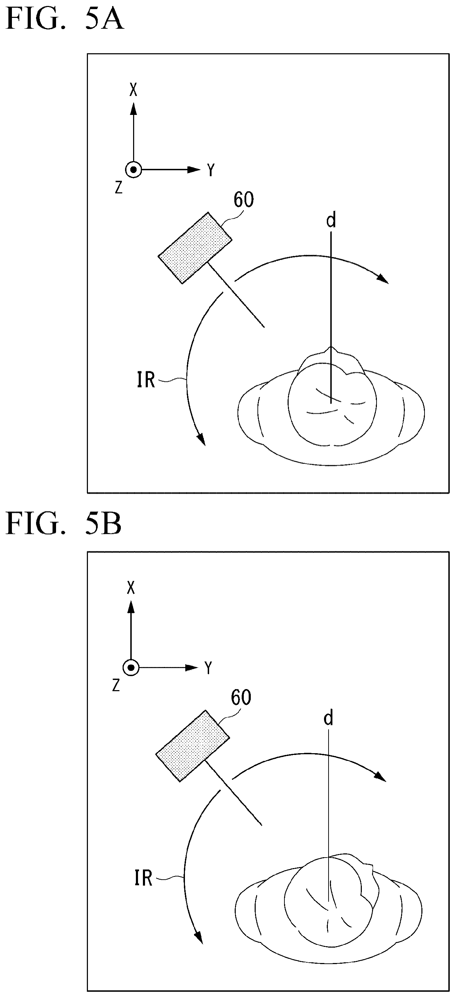

FIG. 5A and FIG. 5B are views for explaining a region of the driver monitor camera 60. The driver monitor camera 60 is provided, for example, on an upper portion of a front windshield, or on a room mirror or the like at a middle or in the vicinity of the middle in a width direction of the vehicle. As shown in FIG. 5, the driver monitor camera 60 captures an image of the driver from an oblique forward direction. The driver monitor camera 60 captures an image of the driver, for example, from a position that is displaced in a predetermined direction with respect to a horizontal direction from a direction d and faces the driver. The direction d is a direction in which the driver seated in the driver seat faces straight forward. The "position that is displaced in a predetermined direction with respect to a horizontal direction" is a position obtained by rotating the direction d counterclockwise by a predetermined angle around a Z axis. The driver monitor camera 60 can capture an image of a range of an imaging region IR when the driver is seen from an upper surface.

When the face of the driver is facing a front (the plus X direction, the direction d), the driver monitor camera 60 can image the face of the driver. When the face of the driver is rotated (rotated around the Z axis) in the horizontal direction by a predetermined angle or more (when a yaw angle is a predetermined angle or more), the driver monitor camera 60 cannot image the face of the driver and can image the side of the head or the rear of the head of the driver.

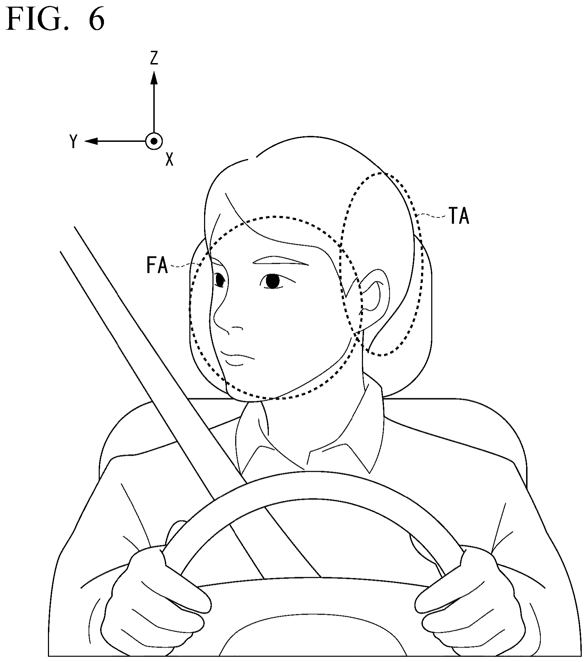

FIG. 6 is a view showing an example of an image captured by the driver monitor camera. When the driver is facing the front, the face and the eye of the driver are in the imaging region IR as shown in FIG. 5A described above, and the driver monitor camera 60 can capture an image of a region FA including the face and the eye of the driver. When the driver rotates the face in the horizontal direction (when rotating the face around the Z axis), the face and the eye of the driver are at the outside of the imaging region IR as shown in FIG. 5B described above, and the driver monitor camera 60 cannot capture the image of the region FA of the driver and captures an image of a region TA of the rear of the head of the driver.

The driver recognition portion 120 can recognize the visual observation direction based on an image in which the region FA is captured. The driver recognition portion 120 cannot recognize the visual observation direction based on an image in which the region TA is captured.

When a risk object is present in front of the vehicle M or in a forward and lateral direction, the process portion 130 can recognize whether or not the driver has visually observed the direction in which the risk object is present based on the image captured by the driver monitor camera 60. As shown in FIG. 3 described above, when an object such as a bicycle is present in a lateral direction of the vehicle M, in a rearward and lateral direction of the vehicle M, or the like, the process portion 130 cannot allow the driver to recognize whether or not the driver has visually observed the direction in which the risk object is present based on the image captured by the driver monitor camera 60.

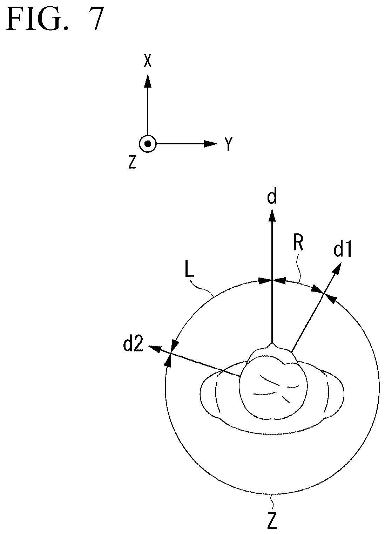

FIG. 7 is a view for explaining the direction of the face of the driver and a range that can be visually observed from an image. When the reference direction of the face of the driver is located in an angle range R in a rightward direction from the direction d to a direction d1 or in an angle range L in a leftward direction from the direction d to a direction d2, the driver monitor camera 60 can capture, for example, an image of the region FA including the face and the eye of the driver of FIG. 6 described above. The driver recognition portion 120 can recognize the visual observation direction of the driver based on the image. The reference direction of the face is a center axis direction of the face or an arbitrary direction based on the face. In the example of FIG. 7, the direction d is the reference direction.

The direction d is a reference direction in the horizontal direction. The direction d is the center axis direction of the vehicle M as described above and coincides with a direction of the face of the driver when the driver faces straight forward in a state where the driver is seated. The direction d1 is a direction obtained by rotating a virtual line that starts from a reference point (for example, the driver) and extends toward the direction d clockwise by a first angle. The direction d2 is a direction obtained by rotating the virtual line that starts from the reference point and extends toward the direction d counterclockwise by a second angle. An angle range from the direction d to the direction d1 is different from an angle range from the direction d to the direction d2. The angle range from the direction d to the direction d1 is narrower than the angle range from the direction d to the direction d2. A rightward direction or a leftward direction is an example of a "first direction".

As described above, when the reference direction of the face (or the line of sight) of the driver is directed within the angle range R from the direction d to the direction d1, or the reference direction of the face of the driver is directed within the angle range L from the direction d to the direction d2, the driver monitor camera 60 can capture, for example, an image of the region FA including the face and the eye of the driver in FIG. 6 described above. In this case, the driver recognition portion 120 can recognize the visual observation direction of the driver from the image in which the region FA described above is captured. When the reference direction of the face of the driver is directed to an angle range Z other than the angle range described above, the driver monitor camera 60 cannot capture an image of the region FA and captures an image of the side of the head of the driver (for example, the region TA in FIG. 6). In this case, the driver recognition portion 120 cannot recognize the visual observation direction of the driver from the image (for example, an image in which the region TA is captured) described above.

As described above, since the driver recognition portion 120 cannot recognize the visual observation direction from the image, the process portion 130 estimates whether or not a risk object (an object outside a region) outside the angle range R or outside the angle range L is visually recognized by utilizing a change in the reference direction of the face of the driver.

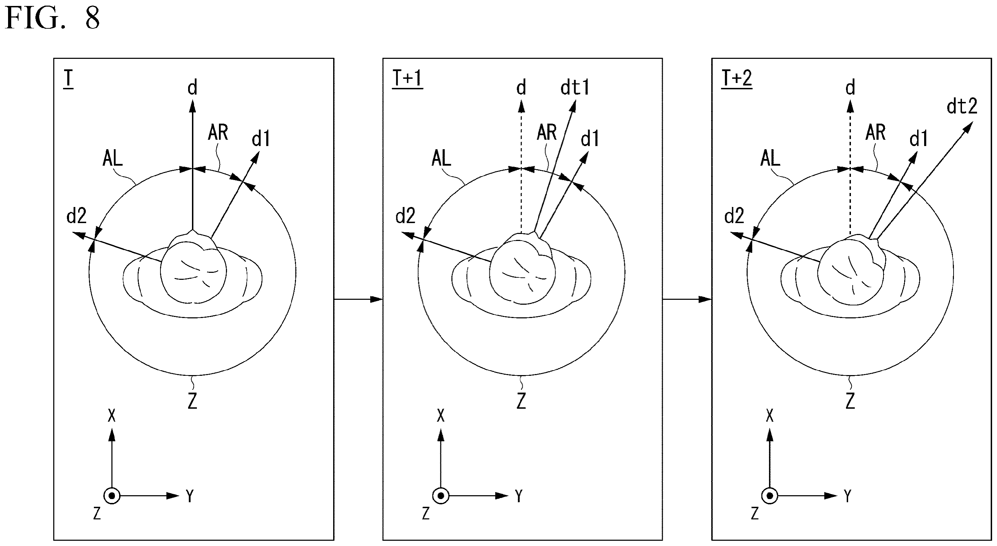

FIG. 8 is a view for explaining a process of estimating that the driver has visually observed an object outside a region. At a time T, the reference direction of the face of the driver is directed to the direction d. At a time T+1, the driver has rotated the face clockwise around the Z axis, and the reference direction of the face of the driver is located in a direction dt1. The direction dt1 is a direction within a first angle range AR. The first angle range AR may be, for example, the same angle range as the angle range R described above, or may be a range in which a range of the direction d is excluded in the angle range R or a range in which a range of a predetermined angle (several degrees or several tens of degrees in a clockwise direction) from the direction d is excluded in the angle range R.

At a time T+1, the driver recognition portion 120 can recognize the visual observation direction of the driver. It is assumed that the reference direction of the face of the driver remains within the first angle range AR from the time T+1 to the time T+2.

At a time T+2, the driver has further rotated the face, and the reference direction of the face of the driver is located in a direction dt2. The direction dt2 is a direction outside the first angle range AR. At this time, the driver recognition portion 120 cannot recognize the visual observation direction of the driver.

As described above, when it is determined that the reference direction of the face of the driver remains within the first angle range AR for a predetermined time and the driver is visually observing the direction within the first angle range AR for the predetermined time and then it is determined that it becomes impossible to acquire the visual observation direction of the driver based on the image, the process portion 130 estimates that the driver has visually observed the direction outside the first angle range (angle range Z).

The first angle range AR or a first angle range AL described later is an example of a "first region". The region Z is an example of a "second region". The largeness of the first angle range AR is different from the largeness of the first angle range AL, and for example, the first angle range AL is larger than the first angle range AR. In other words, the range in the horizontal direction of the first region AR in the first direction is a range from a first virtual line to a second virtual line, and the range in the horizontal direction of the first region AL in the second direction is a range from a third virtual line to a fourth virtual line. The first virtual line is a line that extends from a reference point in a first horizontal direction which is different from the reference direction that is a center axis direction of a movable body on which the user boards, and the second virtual line is a line (a virtual line that extends in a direction of the direction d1) that starts from the reference point and extends in a second horizontal direction obtained by rotating the first virtual line by a first angle. The third virtual line is a line that extends from the reference point in a third horizontal direction which is different from the reference direction, and the fourth virtual line is a line (a virtual line that extends in a direction of the direction d2) that starts from the reference point and extends in a fourth horizontal direction obtained by rotating the third virtual line by a second angle.

The case when the face of the driver is rotated counterclockwise is described below. At the time T+1, the driver has rotated the face counterclockwise around the Z axis, and the reference direction of the face of the driver is located within the first angle range (first region) AL. The first angle range AL may be, for example, the same angle range as the angle range L described above, or may be a range in which a range of the direction d is excluded in the angle range L or a range in which a range of a predetermined angle (several degrees or several tens of degrees in a counterclockwise direction) from the direction d is excluded in the angle range L.

At the time T+1, the driver recognition portion 120 can recognize the visual observation direction of the driver. It is assumed that the reference direction of the face of the driver remains within the first angle range AL from the time T+1 to the time T+2.

At the time T+2, the driver has further rotated the face, and the reference direction of the face of the driver is located at a position that is further away from the direction d than the direction d2. At this time, the driver recognition portion 120 cannot recognize the visual observation direction of the driver.

As described above, when it is determined that the reference direction of the face of the driver remains within the first angle range AL for a predetermined time and the driver is visually observing the direction within the first angle range AL for the predetermined time and then it is determined that it becomes impossible to acquire the visual observation direction of the driver based on the image, the process portion 130 estimates that the driver has visually observed the direction outside the first angle range (angle range Z).

### [Flow chart (process of driver recognition portion 120)]

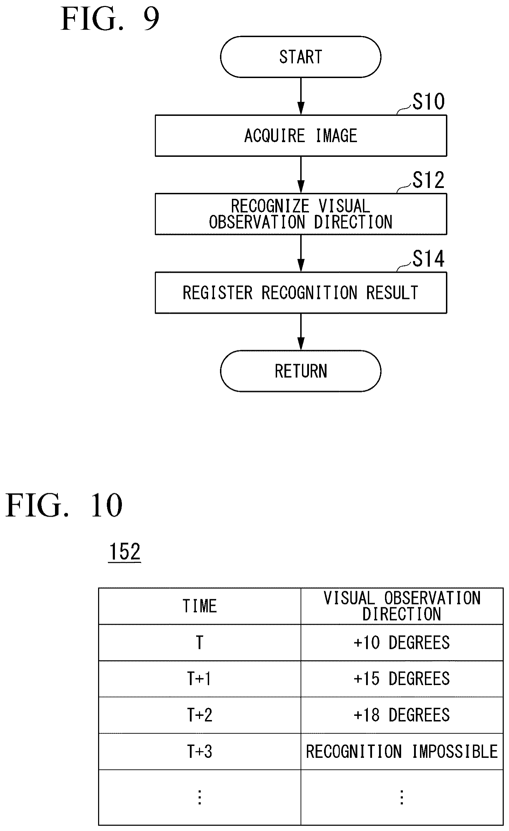

FIG. 9 is a flowchart showing an example of a flow of a process performed by the driver recognition portion 120. First, the driver recognition portion 120 acquires an image captured by the driver monitor camera 60 (Step S10). The driver recognition portion 120 recognizes the visual observation direction (for example, the reference direction of the face of the driver) based on the image (Step S12). The driver recognition portion 120 determines that recognition is impossible, for example, when the visual observation direction of the driver cannot be recognized. The driver recognition portion 120 registers the recognition result in the visual observation information 152 (Step S14).

FIG. 10 is a view showing an example of the visual observation information. The visual observation information 152 is, for example, information in which a time when the image is captured and the visual observation direction are associated with each other. As shown in FIG. 10, the visual observation information 152 includes information indicating the visual observation direction of the driver at each time or information indicating that it is impossible to recognize the visual observation direction.

The process portion 130 can recognize that the driver is visually observing the direction of the first angle range for a predetermined time and that thereafter, the face is directed in the angle range Z outside the first angle range with reference to the visual observation information 152.

### [Flow chart (process of process portion 130)]

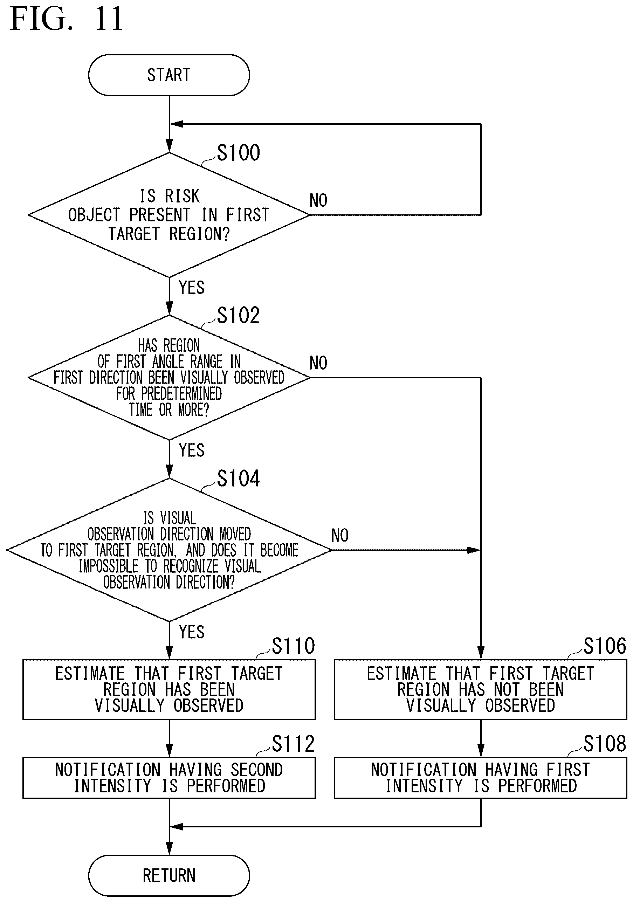

FIG. 11 is a flowchart showing an example of a flow of a process performed by the process portion 130. The present process is a process of the case when a risk object is present on the right side of the vehicle M. In the present process, it is assumed that the driver is visually observing the horizontal direction without facing a vertically upward direction or facing a vertically downward direction. The order of the processes may be changed, or part of the processes may be omitted.

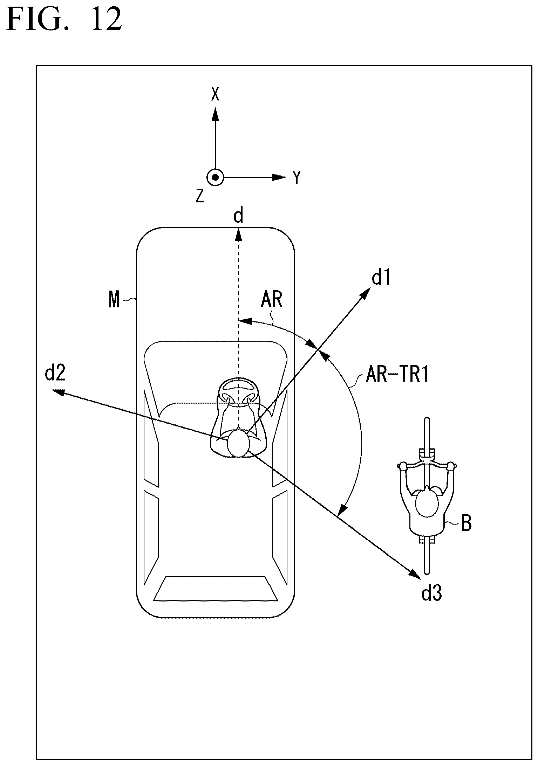

First, the process portion 130 determines whether or not a risk object is present in the first target region based on a result of recognition of the recognition portion 110 (Step S100). FIG. 12 is a view for explaining the first target region. A first target region AR-TR1 is a region set in advance and is a region from a direction d1 to a direction d3. The direction d3 is a direction obtained by rotating a virtual line that extends in a direction d from a reference point clockwise by a third angle. The third angle is an angle that is larer than the first angle and the second angle. The first target region is a region which the driver does not easily confirm by a side mirror or a room mirror of the vehicle M and for which visual observation is recommended.

When a risk object is present in the first target region AR-TR1, it is recommended that the driver performs visual observation by directing the reference direction of the face in a direction at an angle beyond the direction d1. When a bicycle B is present in the first target region AR-TR1 as shown in the drawing, the driver is recommended to visually observe the first target region AR-TR1, for example, when turning the vehicle M to the right or moving the vehicle M in the right direction.

When the risk object is present in the first target region, the process portion 130 refers to the visual observation information 152 and determines whether or not the driver has visually observed the region of the first angle range AR in the first direction for a predetermined time or more (Step S102). When the driver does not visually observe the region of the first angle range AR in the first direction for the predetermined time or more, the routine proceeds to the process of Step S106.

In the process of Step S102 described above, in addition to (or instead of) the time of performing visual observation, when the speed of the change of the visual observation direction around the Z axis (horizontal direction) in the first angle range AR satisfies a standard, the process portion 130 may proceed to the process of Step S104, and when the speed of the change of the visual observation direction in the region of the first angle range AR does not satisfy the standard, the process portion 130 may proceed to the process of Step S106. For example, when the speed of the change of the visual observation direction around the Z axis (horizontal direction) is equal to or more than a threshold value, the process portion 130 may determine that the driver does not perform a behavior for visually observing the risk object and may proceed to the process of Step S106.

When the driver is visually observing the region of the first angle range AR in the first direction for a predetermined time or more, the process portion 130 determines whether or not the visual observation direction is moved to the first target region AR-TR1 direction and it becomes impossible to recognize the visual observation direction from the image (Step S104). When the visual observation direction is not moved to the first target region AR-TR1 direction or when it is possible to recognize the visual observation direction from the image, the process proceeds to Step S106.

In Step S106, the process portion 130 estimates that the driver has not visually observed the first target region AR-TR1 (Step S106) and performs notification having a first intensity which is stronger than that of notification having a second intensity (Step S108). The strong notification means that the sound is made louder so that the driver is made further cautious or that an image including contents so that attention is further paid to the presence of a risk object is provided.

When the visual observation direction is moved to the first target region AR-TR1 direction and the visual observation direction cannot be recognized from the image, the process portion 130 estimates that the driver is visually observing the first target region AR-TR1 (Step S110) and performs the notification having the second intensity (Step S112). Thereby, one routine of the present flowchart is ended.

In the example described above, an example in which the risk object is present in the first target region AR-TR1 on the right side of the vehicle M is described. Even when a risk object is present in the second target region AR-TR2 on the left side of the vehicle M, a process of a similar purpose is performed, and notification in accordance with the visual observation direction of the driver is performed.

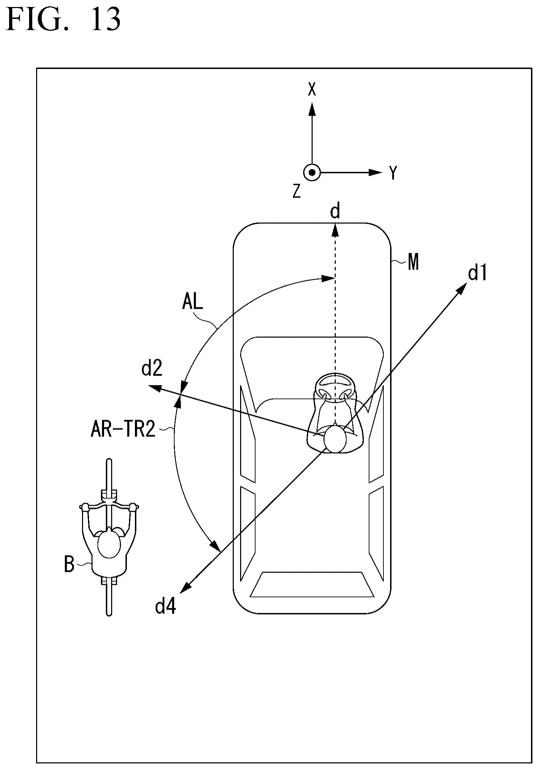

FIG. 13 is an example of a scene in which a risk object is present in the second target region on the left side of the vehicle. When a risk object is present in the second target region AR-TR2 as shown in FIG. 13, by replacing the first target region AR-TR1 with the second target region AR-TR2, replacing the first direction with the second direction, and the like in the process of the flowchart of FIG. 11, a process of a similar purpose is performed, and notification in accordance with the visual observation direction is performed. The second target region AR-TR2 is a region set in advance and is a region from a direction d2 to a direction d4. The direction d4 is a direction obtained by rotating a virtual line extending from a reference point in a direction d counterclockwise by a fourth angle. The fourth angle is an angle that is larger than the first angle and the second angle. The second target region is a region which the driver does not easily confirm by a side mirror or a room mirror of the vehicle M and for which visual observation is recommended.

In the example described above, the vehicle M is a right-hand drive vehicle, but even when the vehicle M is a left-hand drive vehicle, various processes described above may be performed in a similar purpose.

According to the embodiment described above, when the drive assist device 100 determines that based on direction information indicating a visual observation direction in which a user is visually observing based on an image of a face of the user captured by an imaging portion at a predetermined interval, the user is visually observing a first region in a first direction in which the visual observation direction is any of left and right directions with respect to a reference direction in a horizontal direction for a predetermined time and then determines that it becomes impossible to acquire the direction information based on the image, the drive assist device 100 estimates that the user has visually observed a second region in the first direction, and thereby, it is possible to estimate the visual observation direction of an occupant. For example, the drive assist device 100 can estimate the visual observation direction of the occupant even when the image of the face cannot be acquired.

The embodiment described above can be expressed as follows.

An information processing apparatus configured to include:
a storage medium that stores computer-readable instructions; and
a processor connected to the storage medium, the processor executing the computer-readable instructions to perform:
   a process of acquiring direction information indicating a visual observation direction in which a user is visually observing based on an image of a face of the user captured by an imaging portion at a predetermined interval; and
   a process of estimating that the user has visually observed a second region in a first direction when it is determined that based on the direction information, the user is visually observing a first region in the first direction in which the visual observation direction is any of left and right directions with respect to a reference direction in a horizontal direction for a predetermined time and then it is determined that it becomes impossible to acquire the direction information based on the image.

Although modes for implementing the present invention have been described using the embodiments, the present invention is not limited to such embodiments at all, and various modifications and replacements can be made without departing from the scope of the present invention.

### DESCRIPTION OF THE REFERENCE SYMBOLS

- 60: Driver monitor camera
- 100: Drive assist device
- 120: Driver recognition portion
- 130: Process portion
- 140: Drive assist portion

## Claims

1. An information processing apparatus comprising:
an acquisition portion that acquires direction information indicating a visual observation direction in which a user is visually observing based on an image of a face of the user captured by an imaging portion at a predetermined interval; and
a process portion which estimates that the user has visually observed a second region in a first direction when it is determined that based on the direction information, the user is visually observing a first region in the first direction in which the visual observation direction is any of left and right directions with respect to a reference direction in a horizontal direction for a predetermined time and then it is determined that it becomes impossible to acquire the direction information based on the image.

2. The information processing apparatus according to claim 1,
wherein the first region is a region from a first horizontal direction that is different from the reference direction which is a center axis direction of a movable body on which the user boards to a second horizontal direction that is different from the reference direction and the first horizontal direction, and
the second region is a region in a horizontal direction that is further away from the reference direction than the first region.

3. The information processing apparatus according to claim 1,
wherein when the face of the user faces the first region in a range from a first horizontal direction that is different from the reference direction which is a center axis direction of a movable body on which the user boards to a second horizontal direction that is different from the reference direction and the first horizontal direction, the imaging portion is capable of capturing an image including the face of the user from which the process portion is capable of acquiring the direction information based on the image,
when the face of the user faces in a horizontal direction that is further away than the first horizontal direction and the second horizontal direction with reference to the reference direction, the imaging portion is not able to capture an image including the face of the user from which the process portion is capable of acquiring the direction information based on the image, and
when it is determined that the user is visually observing the first region for a predetermined time and then it is determined that it becomes impossible to acquire the direction information based on the image, the process portion assumes that the face of the user faces in the horizontal direction that is further away than the first horizontal direction and the second horizontal direction with reference to the reference direction and estimates that the user has visually observed the second region in the first direction.

4. The information processing apparatus according to claim 3,
wherein the imaging portion is mounted on the movable body and captures an image of the user who is an occupant of the movable body from a position that faces the user and is displaced in a predetermined direction from the reference direction.

5. The information processing apparatus according to claim 2,
wherein the imaging portion is mounted on the movable body and captures an image of the user who is an occupant of the movable body from a position that faces the user and is displaced in a predetermined direction regarding a horizontal direction from the reference direction,
the first region is a region in which the process portion is capable of recognizing the visual observation direction based on the image captured by the imaging portion, and
a range in a horizontal direction of the first region in the first direction is different from a range in the horizontal direction of the first region in a second direction which is an opposite direction to the first direction.

6. The information processing apparatus according to claim 5,
wherein the range in the horizontal direction of the first region in the first direction is a range from a first virtual line to a second virtual line,
the first virtual line is a line that extends from a reference point in the first horizontal direction which is different from the reference direction that is the center axis direction of the movable body on which the user boards,
the second virtual line is a line that starts from the reference point and extends in the second horizontal direction obtained by rotating the first virtual line by a first angle,
the range in the horizontal direction of the first region in the second direction is a range from a third virtual line to a fourth virtual line,
the third virtual line is a line that extends from a reference point in a third horizontal direction which is different from the reference direction,
the fourth virtual line is a line that starts from the reference point and extends in a fourth horizontal direction obtained by rotating the third virtual line by a second angle, and
the second angle is larger than the first angle.

7. The information processing apparatus according to claim 1,
wherein the user is a driver of a movable body, and
on a condition that an object is present in a vicinity of the movable body, when it is determined that based on the direction information, the first region in the first direction in which the visual observation direction is any of the left and right directions with respect to the reference direction is being visually observed for the predetermined time and then it is determined that it becomes impossible to acquire the direction information based on the image, the process portion performs an estimation process which estimates that the user has visually observed the second region in the first direction.

8. The information processing apparatus according to claim 7,
wherein the object is a pedestrian, a bicycle, an automobile, or a two wheeled vehicle.

9. The information processing apparatus according to claim 7,
wherein the reference direction is a forward direction of the movable body, and
the process portion performs the estimation process on a condition that the object is present in a target region which is in a side direction of the movable body and in which the driver is capable of recognizing the object by visually recognizing the second region.

10. The information processing apparatus according to claim 7,
wherein the process portion performs notification having a first intensity when the process portion does not estimate that the object is present in a target region which is in a side direction of the movable body and in which the driver is capable of recognizing the object by visually recognizing the second region and that the driver has visually observed the second region, and
the process portion performs notification having a second intensity which is weaker than that of the notification having the first intensity when the process portion estimates that the object is present in the target region and that the driver has visually observed the second region.

11. An information processing method that performs,
by way of a computer,
a process of acquiring direction information indicating a visual observation direction in which a user is visually observing based on an image of a face of the user captured by an imaging portion at a predetermined interval, and
a process of estimating that the user has visually observed a second region in a first direction when it is determined that based on the direction information, the user is visually observing a first region in the first direction in which the visual observation direction is any of left and right directions with respect to a reference direction in a horizontal direction for a predetermined time and then it is determined that it becomes impossible to acquire the direction information based on the image.

12. A program that causes a computer to perform:
a process of acquiring direction information indicating a visual observation direction in which a user is visually observing based on an image of a face of the user captured by an imaging portion at a predetermined interval; and
a process of estimating that the user has visually observed a second region in a first direction when it is determined that based on the direction information, the user is visually observing a first region in the first direction in which the visual observation direction is any of left and right directions with respect to a reference direction in a horizontal direction for a predetermined time and then it is determined that it becomes impossible to acquire the direction information based on the image.
